# EUROPÄISCHE PATENTANMELDUNG

(11) **EP 4 310 343 A1**
(43) Veröffentlichungstag der Anmeldung: **24.01.2024**
(21) Anmeldenummer: 23182564.7
(22) Anmeldetag: 30.06.2023
(51) Int. Cl.: F15B 11/16, A01B 63/10

(54) **LASTGESTEUERTE HYDRAULIKVERSORGUNG FÜR EIN AN EINEM LANDWIRTSCHAFTLICHEN TRAKTOR ANGEBRACHTES ANBAUGERÄT**

(30) Priorität: 18.07.2022 DE 102022117878; 18.07.2022 DE 102022117880
(71) Anmelder: Deere & Company, Moline, IL 61265 (US)
(72) Erfinder: BILLICH, MANUEL, 68163 Mannheim (DE)
(74) Vertreter: Dehnhardt, Florian Christopher

(57) **Zusammenfassung**

Lastgesteuerte Hydraulikversorgung (10) für ein an einem landwirtschaftlichen Traktor (12) angebrachtes Anbaugerät (14), umfassend eine von einer hydraulischen Hochdruckquelle (22) gespeiste Versorgungsleitung (24), eine in ein Hydraulikreservoir (28) mündende Rücklaufleitung (30) sowie eine Lastmeldeleitung (26), wobei die Hydraulikversorgung (10) einen durch die Versorgungsleitung (24) hindurchtretenden Volumenstrom nach Maßgabe einer an der Lastmeldeleitung (26) anliegenden Druckrückmeldung bereitstellt. Hierbei steht die Lastmeldeleitung (26) mit einer Einrichtung zur Druckbegrenzung (54) in Verbindung.

## Beschreibung

Die Erfindung betrifft eine lastgesteuerte Hydraulikversorgung für ein an einem landwirtschaftlichen Traktor angebrachtes Anbaugerät, umfassend eine von einer hydraulischen Hochdruckquelle gespeiste Versorgungsleitung, eine in ein Hydraulikreservoir mündende Rücklaufleitung sowie eine Lastmeldeleitung, wobei die Hydraulikversorgung einen durch die Versorgungsleitung hindurchtretenden Volumenstrom nach Maßgabe einer an der Lastmeldeleitung anliegenden Druckrückmeldung bereitstellt.

In den letzten Jahren ist ein zunehmender Trend zu landwirtschaftlichen Anbaugeräten mit immer komplexer werdenden Arbeitsfunktionen zu beobachten. Typischerweise dienen zur Ausführung der Arbeitsfunktionen hydraulische Aktoren in Gestalt unterschiedlichster Stell- und/oder Antriebseinrichtungen. Mit zunehmender Komplexität der Arbeitsfunktionen steigt im Allgemeinen auch die Anzahl der benötigten hydraulischen Aktoren und damit die Anzahl der seitens des landwirtschaftlichen Traktors zu ihrer hydraulischen Versorgung vorzusehenden Hydraulikanschlüsse. Da letztere naturgemäß begrenzt ist, gewinnen sogenannte Power-Beyond-Schnittstellen mehr und mehr an Bedeutung. Diese sind in ISO17567 genormt und sehen eine bedarfsabhängige Versorgung daran angeschlossener hydraulischer Verbraucher mit Hydraulikflüssigkeit vor. Hierzu ist die Hydraulikversorgung lastgesteuert als sogenanntes Load-Sensing-System ausgebildet, wobei die Power-Beyond-Schnittstelle aus insgesamt vier Hydraulikanschlüssen besteht:
P - Versorgungsanschluss
LS - Lastmeldeanschluss zur Druckrückmeldung
R - Rücklaufanschluss
D - Drainageanschluss

Der Rücklaufanschluss dient ebenso wie der Drainageanschluss lediglich dem Rückfluss der Hydraulikflüssigkeit in ein Hydraulikreservoir des landwirtschaftlichen Traktors, beide Anschlüsse werden daher vorliegend nicht weiter thematisiert. Der Fokus liegt vielmehr auf dem Versorgungs- sowie dem Lastmeldeanschluss, denn diese Anschlüsse sind für die eigentliche Funktion der lastgesteuerten Hydraulikversorgung maßgeblich. So wird von der hydraulischen Hochdruckquelle, bei der es sich insbesondere um eine aus dem Hydraulikreservoir gespeiste Verstellpumpe handelt, über den Versorgungsanschluss ein nach Maßgabe des an dem Rückmeldeanschluss anliegenden Lastmeldedrucks angepasster Volumenstrom bereitgestellt.

Mit hydraulischen Aktoren ausgestattete Anbaugeräte übermitteln über die Lastmeldeleitung häufig einen überhöhten, d.h. den tatsächlichen Versorgungsbedarf unangemessenen Lastmeldedruck an die Hydraulikversorgung. Dies veranlasst die Hydraulikversorgung dazu, einen den tatsächlichen Bedarf der hydraulischen Aktoren übersteigenden Versorgungsdruck zu erzeugen und über die Versorgungsleitung bereitzustellen, führt mithin zu einem entsprechend ineffizienten Betrieb.

Angesichts dessen ist es Aufgabe der vorliegenden Erfindung, eine lastgesteuerte Hydraulikversorgung der eingangs genannten Art hinsichtlich eines effizienten Betriebs zu verbessern.

Diese Aufgabe wird durch eine lastgesteuerte Hydraulikversorgung mit den Merkmalen des Patentanspruchs 1 gelöst.

Die lastgesteuerte Hydraulikversorgung für ein an einem landwirtschaftlichen Traktor angebrachtes Anbaugerät umfasst eine von einer hydraulischen Hochdruckquelle gespeiste Versorgungsleitung, eine in ein Hydraulikreservoir mündende Rücklaufleitung sowie eine Lastmeldeleitung, wobei die Hydraulikversorgung einen durch die Versorgungsleitung hindurchtretenden Volumenstrom nach Maßgabe einer an der Lastmeldeleitung anliegenden Druckrückmeldung bereitstellt. Erfindungsgemäß steht die Lastmeldeleitung mit einer Einrichtung zur Druckbegrenzung in Verbindung.

Auf diese Weise ist es möglich, einen an den tatsächlichen Bedarf der hydraulischen Aktoren angepassten Versorgungsdruck zu erzeugen und über die Versorgungsleitung bereitzustellen. Der Umfang der Druckbegrenzung wird hierbei an den zu erwartenden hydraulischen Versorgungsbedarf der hydraulischen Aktoren angepasst und ist üblicherweise für jedes Anbaugerätemodell spezifisch. Damit verbundene Ineffizienzen beim Betrieb der lastgesteuerten Hydraulikversorgung lassen sich so verlässlich vermeiden.

Das druckkompensierte Steuerventil kann hierbei aus einer Kombination eines 2/2-Wege-Proportionalventils mit einem Druckregelventil gebildet sein, wobei das Druckregelventil einen auslassseitigen Hydraulikdruck mit einem einlassseitigen Hydraulikdruck am 2/2-Wege-Proportionalventil vergleicht und auf einen festen Differenzdruck einstellt. Solchermaßen hält das 2/2-Wege-Proportionalventil den sich aus seiner jeweiligen Öffnungsstellung ergebenden Volumenstrom auch im Falle von Lastschwankungen der hydraulischen Aktoren und/oder von betriebsbedingten Druckschwankungen innerhalb der Hydraulikversorgung weitgehend konstant. Zur Vorgabe des Volumenstroms lässt sich das 2/2-Wege-Proportionalventil mittels der Betätigungseinrichtung, die beispielsweise elektrisch oder mechanisch ansteuerbar ist, entgegen einer mittels eines Federelements erzeugten Rückstellkraft in seine geöffnete Stellung verbringen.

Vorteilhafte Weiterbildungen der erfindungsgemäßen lastgesteuerten Hydraulikversorgung gehen aus den Unteransprüchen hervor.

Vorzugsweise umfasst die Einrichtung zur Druckbegrenzung ein in ein Hydraulikreservoir mündendes Druckbegrenzungsventil oder ein in der Lastmeldeleitung liegendes Druckreduzierventil.

Das Druckbegrenzungsventil ist einlassseitig an der Lastmeldeleitung angeschlossen und steht auslassseitig mit dem Hydraulikreservoir in Verbindung. Bei Überschreiten eines vorgegebenen Druckschwellenwerts nimmt dieses entgegen einer mittels eines Federelements erzeugten Rückstellkraft eine geöffnete Stellung ein, sodass eine entsprechende Druckentlastung durch Abfließen von Hydraulikflüssigkeit aus der Lastmeldeleitung in Richtung des Hydraulikreservoirs erfolgt.

Ist aus Effizienzgründen ein (weiterer) Abflusspfad in Richtung des Hydraulikreservoirs unerwünscht, so ist anstelle des Druckbegrenzungsventils der Einsatz eines Druckreduzierventils zu bevorzugen. Das Druckreduzierventil wird unter der Wirkung einer mittels eines Federelements erzeugten Rückstellkraft in eine geöffnete Stellung vorgespannt und bei Überschreiten eines auslassseitig vorgegebenen Druckschwellenwerts in eine geschlossene Stellung gedrängt, sodass ein weiterer Hindurchtritt von Hydraulikflüssigkeit unterbunden wird.

Der Druckschwellenwert wird abhängig vom jeweiligen Anbaugerätemodell individuell vorgegeben und liegt typischerweise in der Größenordnung von 100 bis 190 bar.

Um beim Öffnen des Druckbegrenzungsventils einen plötzlichen bzw. unkontrollierten Druckabfall in der Lastmeldeleitung zu unterbinden, ist es denkbar, dass das Druckbegrenzungsventil über ein in Serie geschaltetes Flussbegrenzungselement mit der Lastmeldeleitung kommuniziert. Das Flussbegrenzungselement kann hierbei dem Druckbegrenzungsventil in der Lastmeldeleitung vor- oder nachgeschaltet sein. Bei dem Flussbegrenzungselement handelt es sich typischerweise um eine Blende oder eine Drossel.

Insbesondere ist die Einrichtung zur Druckbegrenzung mittels einer weiteren Betätigungseinrichtung bezüglich des vorgegebenen Druckschwellenwerts einstellbar. Für den Fall, dass es sich bei der Einrichtung zur Druckbegrenzung um ein Druckbegrenzungsventil oder ein Druckreduzierventil handelt, ist die weitere Betätigungseinrichtung zur Beeinflussung der Rückstellkraft des jeweiligen Federelements ausgebildet und zu diesem Zwecke elektrisch oder mechanisch ansteuerbar.

Des Weiteren kann in der Versorgungsleitung ein druckkompensiertes Steuerventil mit einer Betätigungseinrichtung zur Einstellung des Volumenstroms vorhanden sein. Hierbei kann der durch das druckkompensierte Steuerventil hindurchtretende Volumenstrom durch entsprechende Ansteuerung der Betätigungseinrichtung derart vorgegeben werden, dass eine Priorisierung von im landwirtschaftlichen Traktor befindlichen hydraulischen Verbrauchern erfolgt. Diese können insbesondere sicherheitsrelevante Hydraulikfunktionen des landwirtschaftlichen Traktors betreffen, wie beispielsweise eine hydraulische Lenk- oder Bremsanlage.

Andererseits sind auch Betriebssituationen möglich, in denen es zu einer Unterversorgung der hydraulischen Aktoren des Anbaugeräts kommt, vor allem dann, wenn ein unzureichender Lastmeldedruck an die Hydraulikversorgung des landwirtschaftlichen Traktors übermittelt wird. Unter solchen Umständen ist es vorstellbar, dass eine Ventilanordnung zur variablen Erhöhung eines an der Lastmeldeleitung extern anliegenden Lastmeldedrucks vorhanden ist, die diesen auf ein zu einem angemessenen Volumenstrom führendes Niveau anhebt, typischerweise um bis zu 40 bar.

Hierzu kann die Ventilanordnung ein mittels des extern anliegenden Lastmeldedrucks pilotbetätigtes 2/2-Wegeventil umfassen, wobei das 2/2-Wegeventil einlassseitig an die hydraulische Hochdruckquelle angeschlossen ist und mittels einer die Pilotbetätigung unterstützenden Stellkraft eines Federelements in seine geöffnete Stellung vorgespannt wird. Das 2/2-Wegeventil bildet damit ein Verstärkerventil, bei dem sich der Umfang der Druckerhöhung unmittelbar aus der jeweiligen Stellkraft der Federelements ergibt. Bevorzugt lässt sich diese mittels einer elektrisch oder mechanisch ansteuerbaren Betätigungseinrichtung verändern, sodass eine individuelle Anhebung des Lastmeldedrucks möglich ist, die den spezifischen Bedürfnissen eines jeweiligen Anbaugerätemodells Rechnung trägt.

Die Verwendung eines pilotbetätigten 2/2-Wegeventils als Verstärkerventil führt nicht nur zu einem besonders einfachen Aufbau der Ventilanordnung, sondern verhindert zugleich, dass ein äußerer Eintrag von Kontaminationen über die Lastmeldeleitung in die Hydraulikversorgung des landwirtschaftlichen Traktors erfolgt. Denn der extern anliegende Lastmeldedruck dient lediglich der Pilotbetätigung des 2/2-Wegeventils, eine unmittelbare Verbindung zur Hydraulikversorgung des landwirtschaftlichen Traktors besteht nicht.

Zusätzlich kann dem 2/2-Wegeventil ein als weiteres 2/2-Wegeventil ausgebildetes Freigabeventil in Serie geschaltet sein, wobei das weitere 2/2-Wegeventil mittels des extern anliegenden Lastmeldedrucks derart pilotbetätigt wird, dass dieses bei Überschreiten eines vorgegebenen Druckschwellenwerts eine geöffnete Stellung einnimmt. Das weitere 2/2-Wegeventil stellt sicher, dass der mittels des Verstärkerventils erzeugte erhöhte Lastmeldedruck ausschließlich dann intern an die Hydraulikversorgung übermittelt wird, wenn eine entsprechende externe (anbaugeräteseitige) Versorgungsanforderung an der Lastmeldeleitung anliegt. Der Druckschwellenwert ergibt sich hierbei aus der Rückstellkraft eines Federelements, das derart dimensioniert ist, dass das weitere 2/2-Wegeventil in unbetätigtem Zustand verlässlich seine geschlossene Stellung einnimmt. Der sich insofern ergebende Druckschwellenwert liegt typischerweise in der Größenordnung von 2 bis 4 bar.

Im Ergebnis erlaubt die erfindungsgemäße lastgesteuerte Hydraulikversorgung im Rahmen ihrer unterschiedlichen Ausgestaltungen eine umfassende Korrektur von Fehlanpassungen zwischen der lastgesteuerten Hydraulikversorgung in einem landwirtschaftlichen Traktor sowie einem anbaugeräteseitigen Hydrauliksystem, das dem Betrieb zugehöriger hydraulischer Aktoren dient.

Die erfindungsgemäße lastgesteuerte Hydraulikversorgung für ein an einem landwirtschaftlichen Traktor angebrachtes Anbaugerät wird im Folgenden anhand der Zeichnungen näher beschrieben. Dabei beziehen sich identische Bezugszeichen auf übereinstimmende oder bezüglich ihrer Funktion vergleichbare Komponenten. Es zeigen:
- Fig. 1: ein schematisch dargestelltes erstes Ausführungsbeispiel der erfindungsgemäßen lastgesteuerten Hydraulikversorgung, und
- Fig. 2: ein schematisch dargestelltes zweites Ausführungsbeispiel der erfindungsgemäßen lastgesteuerten Hydraulikversorgung.

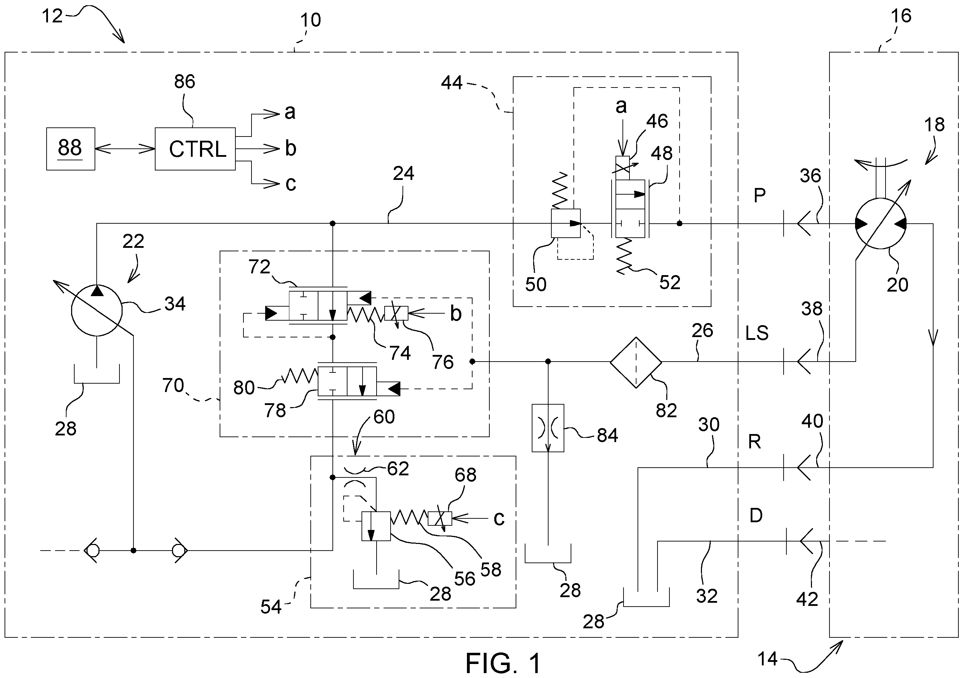

Fig. 1 zeigt ein erstes Ausführungsbeispiel der erfindungsgemäßen lastgesteuerten Hydraulikversorgung.

Die in Fig. 1 schematisch dargestellte Hydraulikversorgung 10 dient dem Betrieb eines an einem landwirtschaftlichen Traktor 12 angebrachten Anbaugeräts 14, genauer gesagt wenigstens eines von einem anbaugeräteseitigen Hydrauliksystem 16 umfassten hydraulischen Aktors 18 in Gestalt einer stellvertretend als Hydraulikmotor dargestellten Stell- und/oder Antriebseinrichtung 20, mittels derer sich eine zugehörige Arbeitsfunktion des Anbaugeräts 14 ausführen lässt.

Die lastgesteuerte Hydraulikversorgung 10 bildet eine sogenannte Power-Beyond-Schnittstelle mit insgesamt vier Hydraulikanschlüssen:
P - Versorgungsanschluss
LS - Lastmeldeanschluss zur Druckrückmeldung
R - Rücklaufanschluss
D - Drainageanschluss

Jeder der Hydraulikanschlüsse P, LS, R und D geht in eine zugehörige Hydraulikleitung über, genauer gesagt in eine von einer hydraulischen Hochdruckquelle 22 gespeiste Versorgungsleitung 24, eine Lastmeldeleitung 26 sowie eine in ein Hydraulikreservoir 28 mündende Rücklauf- bzw. Drainageleitung 30, 32.

Der Rücklaufanschluss R dient ebenso wie der Drainageanschluss D lediglich dem Rückfluss der Hydraulikflüssigkeit in das Hydraulikreservoir 28 des landwirtschaftlichen Traktors 12, beide Anschlüsse werden daher vorliegend nicht weiter thematisiert. Der Fokus liegt vielmehr auf dem Versorgungs- sowie dem Lastmeldeanschluss P, LS, denn diese Anschlüsse sind für die eigentliche Funktion der lastgesteuerten Hydraulikversorgung 10 maßgeblich. So wird von der hydraulischen Hochdruckquelle 22, bei der es sich um eine aus dem Hydraulikreservoir 28 gespeiste Verstellpumpe 34 handelt, über den Versorgungsanschluss P ein nach Maßgabe des an dem Rückmeldeanschluss LS anliegenden Lastmeldedrucks angepasster Volumenstrom bereitgestellt.

Mit anderen Worten bildet die lastgesteuerte Hydraulikversorgung 10 ein sogenanntes Load-Sensing-System, das einen durch die Versorgungsleitung 24 in Richtung des Versorgungsanschluss P hindurchtretenden Volumenstrom nach Maßgabe einer an der Lastmeldeleitung 26 anliegenden Druckrückmeldung bereitstellt.

Das zum Betrieb des wenigstens einen hydraulischen Aktors 18 vorgesehene anbaugeräteseitige Hydrauliksystem 16 ist mittels zugehöriger Hydraulikschläuche bzw. -kuppler 36, 38, 40, 42 lösbar mit der lastgesteuerten Hydraulikversorgung 10 verbunden.

Des Weiteren ist in der Versorgungsleitung 24 ein druckkompensiertes Steuerventil 44 mit einer ersten Betätigungseinrichtung 46 zur Einstellung des Volumenstroms vorhanden.

Das druckkompensierte Steuerventil 44 ist aus einer Kombination eines 2/2-Wege-Proportionalventils 48 mit einem Druckregelventil 50 gebildet, wobei das Druckregelventil 50 einen auslassseitigen Hydraulikdruck mit einem einlassseitigen Hydraulikdruck am 2/2-Wege-Proportionalventil 48 vergleicht und auf einen festen Differenzdruck einstellt. Solchermaßen hält das 2/2-Wege-Proportionalventil 48 den sich aus seiner jeweiligen Öffnungsstellung ergebenden Volumenstrom auch im Falle von Lastschwankungen des wenigstens einen hydraulischen Aktors 18 und/oder von betriebsbedingten Druckschwankungen innerhalb der Hydraulikversorgung 10 weitgehend konstant. Zur Vorgabe des Volumenstroms lässt sich das 2/2-Wege-Proportionalventil 48 durch elektrische Ansteuerung der ersten Betätigungseinrichtung 46 entgegen einer mittels eines Federelements 52 erzeugten Rückstellkraft in seine geöffnete Stellung verbringen.

Mit hydraulischen Aktoren ausgestattete Anbaugeräte übermitteln über die Lastmeldeleitung 26 häufig einen überhöhten, d.h. den tatsächlichen Versorgungsbedarf unangemessenen Lastmeldedruck an die Hydraulikversorgung 10. Dies führt letztlich dazu, dass die Hydraulikversorgung 10 dazu veranlasst wird, einen den tatsächlichen Bedarf der hydraulischen Aktoren übersteigenden Versorgungsdruck zu erzeugen über die Versorgungsleitung 24 am Versorgungsanschluss P bereitzustellen. Um die damit verbundenen Effizienzeinbußen beim Betrieb der Hydraulikversorgung 10 zu unterbinden, steht die Lastmeldeleitung 26 mit einer Einrichtung zur Druckbegrenzung 54 in Verbindung. Der Umfang der Druckbegrenzung wird hierbei an den zu erwartenden hydraulischen Versorgungsbedarf der hydraulischen Aktoren angepasst und ist üblicherweise für jedes Anbaugerätemodell spezifisch.

Gemäß dem in Fig. 1 wiedergegebenen ersten Ausführungsbeispiel der lastgesteuerten Hydraulikversorgung 10 umfasst die Einrichtung zur Druckbegrenzung 54 ein in das Hydraulikreservoir 28 mündendes Druckbegrenzungsventil 56.

Das Druckbegrenzungsventil 56 ist einlassseitig an der Lastmeldeleitung 26 angeschlossen und steht auslassseitig mit dem Hydraulikreservoir 28 in Verbindung. Bei Überschreiten eines vorgegebenen Druckschwellenwerts nimmt dieses entgegen einer mittels eines Federelements 58 erzeugten Rückstellkraft eine geöffnete Stellung ein, sodass eine entsprechende Druckentlastung durch Abfließen von Hydraulikflüssigkeit aus der Lastmeldeleitung 26 in Richtung des Hydraulikreservoirs 28 erfolgt.

Um beim Öffnen des Druckbegrenzungsventils 56 einen plötzlichen bzw. unkontrollierten Druckabfall in der Lastmeldeleitung 26 zu unterbinden, ist vorgesehen, dass das Druckbegrenzungsventil 56 über ein in Serie geschaltetes Flussbegrenzungselement 60 mit der Lastmeldeleitung 26 kommuniziert. Beispielsgemäß ist das Flussbegrenzungselement 60 in Gestalt einer Blende 62 dem Druckbegrenzungsventil 56 in der Lastmeldeleitung 26 vorgeschaltet, dieses kann dem Druckbegrenzungsventil 56 jedoch auch nachgeschaltet sein.

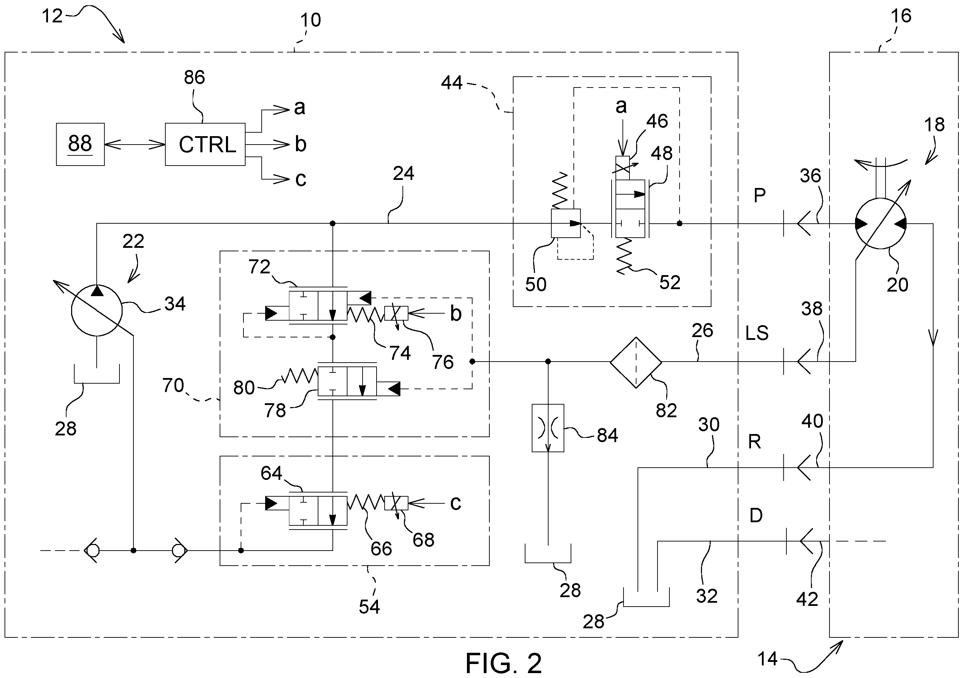

Entsprechend einem in Fig. 2 wiedergegebenen zweiten Ausführungsbeispiel der erfindungsgemäßen lastgesteuerten Hydraulikversorgung 10 umfasst die Einrichtung zur Druckbegrenzung 54 anstelle eines Druckbegrenzungsventils 56 ein in der Lastmeldeleitung 26 liegendes Druckreduzierventil 64.

Bezüglich der übrigen Bestandteile bzw. Komponenten stimmen die beiden Ausführungsbeispiele überein.

Das Druckreduzierventil 64 wird unter der Wirkung einer mittels eines Federelements 66 erzeugten Rückstellkraft in eine geöffnete Stellung vorgespannt und bei Überschreiten eines auslassseitig vorgegebenen Druckschwellenwerts in eine geschlossene Stellung gedrängt, sodass ein weiterer Hindurchtritt von Hydraulikflüssigkeit unterbunden wird.

Sowohl das Druckbegrenzungsventil 56 wie auch das Druckreduzierventil 64 ist mittels einer jeweiligen zweiten Betätigungseinrichtung 68 bezüglich des vorgegebenen Druckschwellenwerts einstellbar. Hierzu ist die zweite Betätigungseinrichtung 68 derart ausgebildet, dass sich die Rückstellkraft des Federelements 58, 66 durch elektrische Ansteuerung der zweiten Betätigungseinrichtung 68 gezielt beeinflussen lässt.

Der Druckschwellenwert wird abhängig vom jeweiligen Anbaugerätemodell individuell vorgegeben und liegt typischerweise in der Größenordnung von 100 bis 190 bar.

Die vorstehend beschriebenen Maßnahmen werden Betriebssituationen gerecht, in denen es aufgrund von Fehlanpassungen zwischen der lastgesteuerten Hydraulikversorgung 10 und dem anbaugeräteseitigen Hydrauliksystem 16 zu einer Überversorgung des wenigstens einen Aktors 18 mit Hydraulikflüssigkeit kommt. Andererseits sind auch zu einer Unterversorgung führende Betriebssituationen möglich, vor allem dann, wenn ein unzureichender Lastmeldedruck an die Hydraulikversorgung 10 des landwirtschaftlichen Traktors 12 übermittelt wird. Dementsprechend ist eine Ventilanordnung 70 zur variablen Erhöhung eines an der Lastmeldeleitung 26 extern, also am Lastmeldeanschluss LS anliegenden Lastmeldedrucks vorhanden, die es erlaubt, diesen auf ein zu einem angemessenen Volumenstrom führendes Niveau anzuheben, typischerweise um bis zu 40 bar.

Hierzu umfasst die Ventilanordnung 70 ein mittels des extern anliegenden Lastmeldedrucks pilotbetätigtes 2/2-Wegeventil 72, wobei das 2/2-Wegeventil 72 einlassseitig an die hydraulische Hochdruckquelle 22 angeschlossen ist und mittels einer die Pilotbetätigung unterstützenden Stellkraft eines Federelements 74 in seine geöffnete Stellung vorgespannt wird. Das 2/2-Wegeventil 72 bildet damit ein Verstärkerventil, bei dem sich der Umfang der Druckerhöhung unmittelbar aus der jeweiligen Stellkraft der Federelements 74 ergibt. Auslassseitig erfolgt eine der Stellkraft des Federelements 74 entgegengesetzte Pilotbetätigung des 2/2-Wegeventils 72, sodass sich an diesem stabile Druckverhältnisse einstellen.

Die Stellkraft lässt sich mittels einer elektrisch ansteuerbaren dritten Betätigungseinrichtung 76 verändern, sodass eine individuelle Anhebung des Lastmeldedrucks möglich ist, die den spezifischen Bedürfnissen eines jeweiligen Anbaugerätemodells Rechnung trägt.

Zusätzlich ist dem 2/2-Wegeventil 72 ein als weiteres 2/2-Wegeventil 78 ausgebildetes Freigabeventil in Serie geschaltet, wobei das weitere 2/2-Wegeventil 78 mittels des extern anliegenden Lastmeldedrucks derart pilotbetätigt wird, dass dieses bei Überschreiten eines vorgegebenen Druckschwellenwerts eine geöffnete Stellung einnimmt. Das weitere 2/2-Wegeventil 78 stellt sicher, dass der mittels des Verstärkerventils, also des 2/2-Wegeventils 72 erzeugte erhöhte Lastmeldedruck ausschließlich dann intern an die Hydraulikversorgung 10 übermittelt wird, wenn eine entsprechende externe (anbaugeräteseitige) Versorgungsanforderung an der Lastmeldeleitung 26 anliegt. Der Druckschwellenwert ergibt sich hierbei aus der Rückstellkraft eines weiteren Federelements 80, das derart dimensioniert ist, dass das weitere 2/2-Wegeventil 78 in unbetätigtem Zustand verlässlich seine geschlossene Stellung einnimmt. Der sich insofern ergebende Druckschwellenwert liegt typischerweise in der Größenordnung von 2 bis 4 bar. Beispielsgemäß ist das weitere 2/2-Wegeventil 78 dem 2/2-Wegeventil 72 vorgeschaltet, dieses kann aber auch dem 2/2-Wegeventil 72 nachgeschaltet sein.

Optional ist an der Lastmeldeleitung 26 neben einem unmittelbar hinter dem Lastmeldeanschluss LS angeordneten Filterelement 82, das einen unerwünschten Eintrag von Kontaminationen in Richtung der pilotbetätigten 2/2-Wegeventile 72, 78 unterbindet, ein eine Blende 84 zur Entlastung der Lastmeldeleitung 26 in Richtung des Hydraulikreservoirs 28 angeordnet.

Die zur Behebung möglicher Fehlanpassungen zwischen Hydraulikversorgung 10 und anbaugeräteseitigem Hydrauliksystem 16 erforderliche elektrische Ansteuerung der jeweiligen Betätigungseinrichtungen 46, 68, 76 für ein bestimmtes Anbaugerätemodell erfolgt mittels einer mikroprozessorgesteuerten Kontrolleinheit 86, wobei das betreffende Anbaugerätemodell über eine mit der Kontrolleinheit 86 kommunizierende Nutzerschnittstelle 88 ausgewählt wird.

Ausgehend von den Darstellungen in Fig. 1 bzw. Fig. 2 wirkt die zweite Betätigungseinrichtung 68 zur Beeinflussung der Rückstellkraft mechanisch unmittelbar auf das jeweilige Federelement 58, 66 ein. Davon abweichend kann jedoch auch vorgesehen sein, dass sich mittels der zweiten Betätigungseinrichtung 68 am Druckbegrenzungsventil 56 bzw. am Druckreduzierventil 64 eine der Rückstellkraft entgegenwirkende Gegenkraft erzeugen lässt, wobei in das Federelement 58, 66 unmittelbar nicht eingegriffen wird. Ähnliches gilt auch für die dritte Betätigungseinrichtung 76 sowie das insofern zugehörige Federelement 74.

## Patentansprüche

1. Lastgesteuerte Hydraulikversorgung für ein an einem landwirtschaftlichen Traktor angebrachtes Anbaugerät, umfassend eine von einer hydraulischen Hochdruckquelle (22) gespeiste Versorgungsleitung (24), eine in ein Hydraulikreservoir (28) mündende Rücklaufleitung (30) sowie eine Lastmeldeleitung (26), wobei die Hydraulikversorgung (10) einen durch die Versorgungsleitung (24) hindurchtretenden Volumenstrom nach Maßgabe einer an der Lastmeldeleitung (26) anliegenden Druckrückmeldung bereitstellt, **dadurch gekennzeichnet, dass** die Lastmeldeleitung (26) mit einer Einrichtung zur Druckbegrenzung (54) in Verbindung steht.

2. Hydraulikversorgung nach Anspruch 1, **dadurch gekennzeichnet, dass** die Einrichtung zur Druckbegrenzung (54) ein in das Hydraulikreservoir (28) mündendes Druckbegrenzungsventil (56) oder ein in der Lastmeldeleitung (26) liegendes Druckreduzierventil (64) umfasst.

3. Hydraulikversorgung nach Anspruch 2, **dadurch gekennzeichnet, dass** das Druckbegrenzungsventil (56) über ein in Serie geschaltetes Flussbegrenzungselement (60) mit der Lastmeldeleitung (26) kommuniziert.

4. Hydraulikversorgung nach wenigstens einem der Ansprüche 1 bis 3, **dadurch gekennzeichnet, dass** die Einrichtung zur Druckbegrenzung (54) mittels einer weiteren Betätigungseinrichtung (68) bezüglich des vorgegebenen Druckschwellenwerts einstellbar ist.

5. Hydraulikversorgung nach wenigstens einem der Ansprüche 1 bis 4, **dadurch gekennzeichnet, dass** in der Versorgungsleitung (24) ein druckkompensiertes Steuerventil (44) mit einer Betätigungseinrichtung (46) zur Einstellung des Volumenstroms vorhanden ist.

6. Hydraulikversorgung nach wenigstens einem der Ansprüche 1 bis 5, **dadurch gekennzeichnet, dass** eine Ventilanordnung (70) zur variablen Erhöhung eines an der Lastmeldeleitung (26) extern anliegenden Lastmeldedrucks vorhanden ist.

7. Hydraulikversorgung nach Anspruch 6, **dadurch gekennzeichnet, dass** die Ventilanordnung (70) ein mittels des extern anliegenden Lastmeldedrucks pilotbetätigtes 2/2-Wegeventil (72) umfasst, wobei das 2/2-Wegeventil (72) einlassseitig an die hydraulische Hochdruckquelle (22) angeschlossen ist und mittels einer die Pilotbetätigung unterstützenden Stellkraft eines Federelements (74) in seine geöffnete Stellung vorgespannt wird.

8. Hydraulikversorgung nach Anspruch 7, **dadurch gekennzeichnet, dass** dem 2/2-Wegeventil (72) ein als weiteres 2/2-Wegeventil (78) ausgebildetes Freigabeventil in Serie geschaltet ist, wobei das weitere 2/2-Wegeventil (78) mittels des extern anliegenden Lastmeldedrucks derart pilotbetätigt wird, dass dieses bei Überschreiten eines vorgegebenen Druckschwellenwerts eine geöffnete Stellung einnimmt.
